# EUROPEAN PATENT APPLICATION

(11) **EP 2 465 344 A1**
(43) Date of publication of application: **20.06.2012**
(21) Application number: 10195821.3
(22) Date of filing: 17.12.2010
(51) Int. Cl.: A01K 11/00

(54) **Tag for identifying an animal**

(71) Applicant: Van Aken Invent B.V., 7084 BL Breedenbroek (NL)
(72) Inventor: Van Aken, Walter Hendrikus Maria, 7084 BL, Breedenroek (NL)
(74) Representative: van Kooij, Adriaan

(57) **Abstract**

The invention relates to a tag for identifying an animal, in particular livestock, comprising a first part provided with a male element (3) and a second part (4) provided with a female element, wherein the parts are arranged to form a mutual interlocking connection for connecting the tag to a portion, in particular an ear, of the animal, wherein one of the parts comprises a transponder body (5) holding a transponder for identification of the animal, the transponder body being arranged in the tag for recovery of the transponder body during dismantling of the tag for reuse of the transponder body with said transponder in another tag.

## Description

The present invention relates to a tag for identifying an animal, in particular livestock. The invention furthermore relates to a method for manufacturing a tag for identifying an animal and a method for dismantling a tag from an animal, in particular livestock.

In order to be able to identify and trace the origin of an animal, in particular livestock such as cows, goats, pigs and sheep, it is known to provide these animals with ear tags or ear marks. These ear tags are provided with a unique identification number for establishing the identification of the animal, for instance in a slaughter house.

Conventional ear tags comprise a first part formed as a label whereon the identification number is printed. The first part is furthermore provided with a male element, such as a stem or rod, which can be received in a female element, such as an opening or a through hole, of a second part of the tag. The male part is pierced through for instance the ear of the animal and the second part with its female element is then placed on the male element of the first part for forming an interlocking connection between the two parts. For forming this connection, it is known that the male part is provided with a thickening which snaps upon connection into a recess of the second part. This snapping action or positive locking of the first part and the second part prevents separation of the two parts without destroying the tag.

Next to the printed ID number on the label, it is further known to also print the ID number on the second part, to prevent tempering with the tag. It is furthermore known to provide the tag with a transponder coding a unique number, for instance the same ID number as printed on the tag. This transponder is typically a passive transponder in the form of an RFID-tag. This tag can be read by a suitable reading unit for automatically identifying the animal. Such a transponder typically comprises an antenna in de form of a coil and an RFID-tag provided on this antenna.

Although the known tags allow easy identification of the animals, it is a drawback that, although the used transponder is typically a passive transponder, such a transponder is still expensive and not durable.

It is therefore a goal of the current invention, amongst other goals, to provide a reliable, durable and/or efficient tag for identification of an animal.

This goal, amongst other goals, is met by a tag according to claim 1.

More in particular, this goal is met by a tag for identifying an animal, in particular livestock, comprising a first part provided with a male element and a second part provided with a female element, wherein the parts are arranged to form a mutual interlocking connection for connecting the tag to a portion, in particular an ear, of the animal, wherein one of the parts comprises a transponder body holding a transponder for identification of the animal, the transponder body being arranged in the tag for recovery of the transponder body during dismantling of the tag for reuse of the transponder body with said transponder in another tag.

By providing the transponder in a transponder body, it is possible to separate this transponder body from the tag when dismantling this tag. This allows the transponder to be re-used. Known tags are manufactured for a single use and are discarded thereafter. According to the invention, the most expensive part of the tag, i.e., the transponder, is re-used in another tag, thereby reducing the overall costs for tagging animals. The other parts than the transponder body are preferably not re-used in their current form. The material of the other parts can however be recycled easily, since the material of the transponder is already separated from these other parts.

It should be remarked that with recovering the transponder body is meant that the transponder body can be recovered without any substantial damage to this transponder body. In other words, when the transponder body is recovered, the transponder body can preferably be used in another tag without any structural modification or adaptation to this transponder body. Furthermore, with the term animal, al animals are meant, excluding humans.

According to a preferred embodiment, the transponder body is formed as a separate component of the tag and is arranged removable in the tag, preferably by interlocking. As the transponder body is formed separately, this transponder body can be recovered easily from the remaining parts of the tag during dismantling. The transponder body is connected to the other parts of the tag without being formed integrally therewith. Preferably the transponder body is arranged in the tag by an interlocking connection. With interlocking is meant a connection wherein no chemical bonding occurs between the transponder body and the other parts in use of the tag. The transponder body is thus positively locked, clamped or snapped-fitted with the other parts of the tag in use.

According to a further preferred embodiment of the tag according to the invention, the transponder body encloses the transponder, in particular a chip and possibly an antenna of the transponder. The transponder body hereby protects the transponder, for instance in the form of an antenna provided with a chip, thereby preventing damage to these parts. Preferably the transponder body is formed as a plastic body formed around the transponder. The plastic of the transponder body may be of the same plastic as used for the manufacture of the remaining parts of the tag. However, it is preferred that the transponder body is made from a more durable and/or stiffer plastic. This increases the lifetime of the transponder body. For the other part, less high-quality materials can be used as they are intended for a single use.

According to a further preferred embodiment, the second part comprises the transponder body, wherein the transponder body is an annular body as a female element for receiving the male part of the first part of the tag. The transponder body is thus locked by the male element of the first part upon interlocking the first and the second part. The transponder body is hereby ring shaped and receives the male part of the first part in the connected state. As the antenna, which is typically used in an transponder, is typically a coil, the transponder body is formed accordingly.

It is for instance possible that the second part is formed by the transponder body, i.e. that the second part consists of the transponder body, wherein a thickening of the male part of the first body extends beyond the transponder body for interlocking between the two parts.

However, according to a further embodiment the second part further comprises a cover body, the cover body being arranged to cover the end of the male element in connected state, wherein the cover body and the transponder body are preferably connected by interlocking. The cover body is arranged for covering the end of the male element, thereby preventing tempering with the tag. The cover body may be provided with visualisation means for visualising tempering with the tag. The cover body may furthermore be provided with a print corresponding to the unique ID number of the animal. The cover body and the transponder body are connected releasable, preferably by interlocking, i.e. without any fusing or chemical bonding between the two parts, allowing the easy recovering of the transponder body from the cover body of the second part. The cover body and the transponder body are thus not formed integrally. In particular when the cover body is provided with the printed ID number, the cover body may be manufactured from a less sustainable material than the transponder body, as the cover body can then not be re-used and should thus be recycled after use.

Preferably the cover body substantially encloses the transponder body, thereby preventing any damage to the transponder body during use.

Further, the cover body may for instance be provided with a recess for holding the transponder body. The transponder body may than for instance be clamped or snap-fitted in the recess of the cover body as interlocking connection.

According to a further preferred embodiment, the second part further comprises a second cover body, wherein the first and second cover body enclose the transponder body in the connected state. The two cover bodies may be connected by interlocking, it is however also possible that the two cover bodies are fused together for forming a single cover body in the connected state. The transponder body is preferably enclosed by the two cover bodies. The two cover bodies preferably form a recess for holding the transponder body.

According to a further preferred embodiment, the cover body and the transponder body extend at a distance from each other in the connected state. This allows easy separating the two bodies during dismantling, for instance by cutting or sawing between the bodies.

Preferably, a cutting space is defined between the transponder body and the cover body in the connected state, wherein the cutting space at least encloses a plane, preferably a cutting plane, having at least a size and shape corresponding to the orthogonal projection of the transponder body on the plane. A cutting plane preferably extends through this cutting space. When the transponder body and the cover body need to be separated, the second body can be cut along the cutting plane without damaging the transponder body, thereby opening the cutting space and thereby exposing the transponder body to the open. The transponder body can be removed from the second part, as the formed opening is large enough to pass through the transponder body.

According to a further preferred embodiment, the cover body comprises a recess for receiving the transponder body, wherein the recess is larger than the transponder body for forming the cutting space.

Preferably the transponder body and the cover body comprise cooperating locking elements, wherein the locking elements and the male element of the first part extend through a cutting plane dividing the transponder body and the cover body. The locking elements may for instance comprise hook shaped elements cooperating with slots provided in the other part. The locking elements may further comprise substantially complementary formed surface structures, for instance in the form of ribs.

The transponder body and the cover body are formed as two separate parts which are preferably interlocked for forming the second part of the tag. The cutting plane is then defined as the plane the two bodies lay adjacently in the connected state. More preferably, the transponder body and the cover body extend at a distance from each other in the connected state, wherein the cutting plane extends between the two bodies. The cutting plane is preferably defined as a plane extending between or at least adjacent the transponder body and the cover body. The cutting plane preferably extends substantially perpendicular to the axis of the male element in the connected state.

The locking elements for locking the two bodies together extend through this plane. When the second part is cut along this plane, the locking elements are cut through and the two bodies are separated. This allows efficient separation of the transponder body from the cover body. As also the male element of the first part extends through this cutting plane, also the first part is separated from the second part. Therefore by cutting along this cutting plane, the cover body, the transponder body and the first parts are separated with a single cutting action.

Preferably, the tag is provided with at least one weakening in the cutting plane. A weakening can for instance be formed as a thinner wall section of for instance the cover body. This weakening makes it easier to cut through the cutting plane. The weakening may further be used as an indication of the location of the cutting plane, although other visual marks can be provided on the tag for identifying the location of the cutting plane.

According to a further preferred embodiment of the tag according to the invention, the male element of the first part comprises a resilient thickening, wherein in the interlocked state the thickening extends beyond the transponder body, wherein the diameter of the opening of the transponder body is smaller than the diameter of the thickening.

For connecting the first part with the male element to the second part provided with the transponder body, the resilient thickening of the male element is forced through the opening of the transponder body and when the thickening has passed through this opening, the thickening returns to the original thick size, thereby positively locking the first part with the transponder body of the second part.

According to a further preferred embodiment of the tag according to the invention, the transponder comprises a rewritable RFID-tag or a similar transponder. Using a rewritable or reprogrammable transponder makes it possible to define a new code in the transponder, thereby making it easier to identify another animal with another tag.

It should be noted that the invention is not limited to a particular type of RFID tag. Any suitable transponder, preferably a passive transponder, which can be read electronically from a distance, is suitable for use in the tag according to the invention. The transponder or RDIF may for instance be based on either FDX, HDX or UHF. It is also possible that a glass transponder is used.

Furthermore, the transponder is arranged to at least store an identification code for identifying an animal. However, it is also possible that additional information is stored in storage means of the transponder. It is for instance possible to store medicine use and/or the used feed of the animal.

The invention further relates to a transponder body for use in the tag according to the invention. Preferably, such a transponder body comprises a transponder in the form of a chip and perhaps an antenna. Such an antenna can for instance be formed as a coil. Most preferably the transponder body has an annular shape, wherein the coil shaped antenna is held. The invention furthermore relates to a tag for identifying an animal provided with a rewritable transponder. The transponder may then be formed integrally with for instance the second body.

The invention furthermore relates to a method for manufacturing a tag for identifying an animal, in particular livestock, according to the invention, the method comprising the steps of:
- providing a transponder body having a transponder for identification of the animal;
- providing a first part of a tag provided with a male part;
- providing a second part of a tag provided with a corresponding female part;
- providing at least one of the parts with the transponder body.

According to the method according to the invention, a tag with a re-usable transponder body with transponder is provided. The transponder body is hereby provided as a separate piece. This means that the transponder body is not bonded or formed integrally with another part of the tag. The transponder body is connected to another part of the tag according to the invention preferably by interlocking.

According to a preferred embodiment of the method, the step of providing the second part comprises providing the transponder body with a cover body, the cover body being arranged to cover the end of the male element of the first part in the connected state. The method preferably comprises first providing a transponder body and connecting or interlocking this transponder body to/with the cover body for forming the second part of the tag. The second part can then be connected to the first parts for connecting the tag to the animal.

The method furthermore relates to a method for dismantling a tag for identifying an animal, in particular livestock, according to the invention from a portion of said animal, wherein the method comprises the steps of:
- cutting the tag for separating at least the transponder body from the other parts of the tag, and;
- recovering the transponder body from the tag.

Where the tags according to the prior art are intended for a single use and are typically discarded with the parts of the animal, the tag according to the invention can efficiently be dismantled for recovery the transponder body. The tag according to the invention is here for cut, thereby separating at least the transponder body from the other parts of the tag. The transponder body is hereby preferably not damaged, such that this transponder body can subsequently be used in another tag for tagging another animal.

Preferably, the method comprises the step of cutting the male part of the first part for separating the first and the second parts of the tag. The tag can then be separated from the animal or the portion of the animal.

Preferably, the step of cutting comprises cutting along a cutting plane extending between the transponder body and a cover body of the second part of the tag for separating the transponder body and the cover body, for instance by cutting the locking elements extending between the two bodies.

Preferably, both the method for tagging an animal and for dismantling a tag comprise the step of rewriting the transponder, in particular an RFID tag. By rewriting or emptying the transponder, i.e. providing another code in the code storage means or removing the code from the storage means of the transponder, this transponder can efficiently be used to identify another animal.

The present invention is further illustrated by the following Figures, which show a preferred embodiment of the device according to the invention, and are not intended to limit the scope of the invention in any way, wherein:
- figure 1 schematically shows an animal provided with an ear tag;
- figure 2 schematically shows the ear tag in perspective view;
- figure 3 schematically shows an exploded view of the tag in cross section;
- figure 4 schematically shows the tag in cross section in interlocked state;
- figure 5 schematically shows the transponder body in cross section after cutting;
- figure 6 schematically shows the transponder body according to the invention; and
- figures 7 - 11 show different embodiments of the tag in cross section.

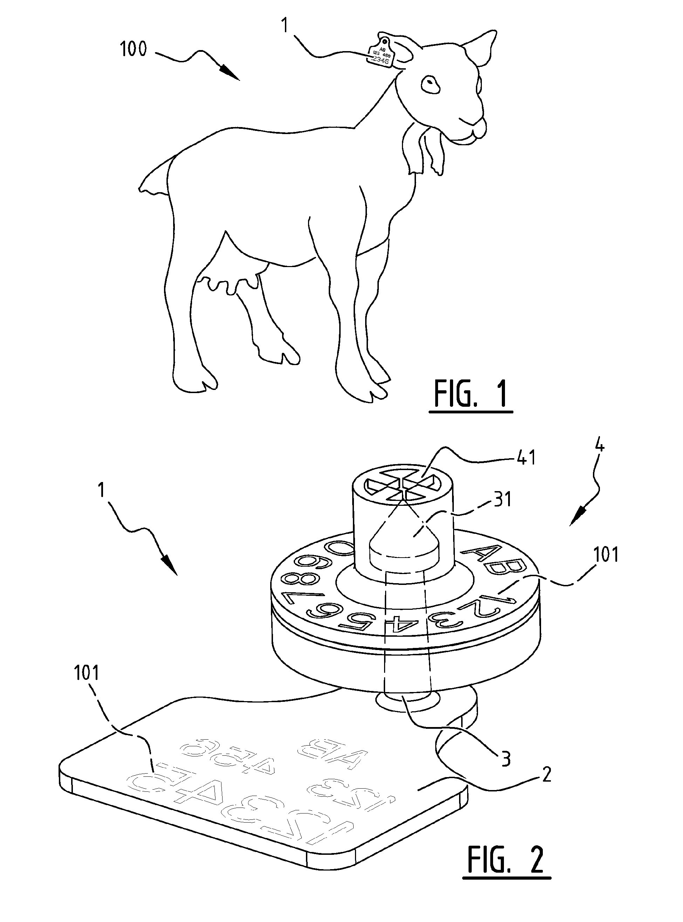

In figure 1 a goat 100 is shown provided with a tag 1 in its ear. The tag 1 is shown in more detail in figure 2. The tag comprises a label 2, whereon a unique code 101 is printed. The label part 2 is provided with a stem 3 provided with a thick head portion 31. Stem 3 can be pierced through an ear of an animal such that a lid part 4 of the tag can be connected to the label part 2 using the stem 3. The lid part 4 is provided with cooperating connecting means for receiving the stem with head 31. Provided on the top of the lid part 4 are indicators 41 which are arranged to prevent tempering with the tag 1. Also the code 101 is printed on the lid part 4.

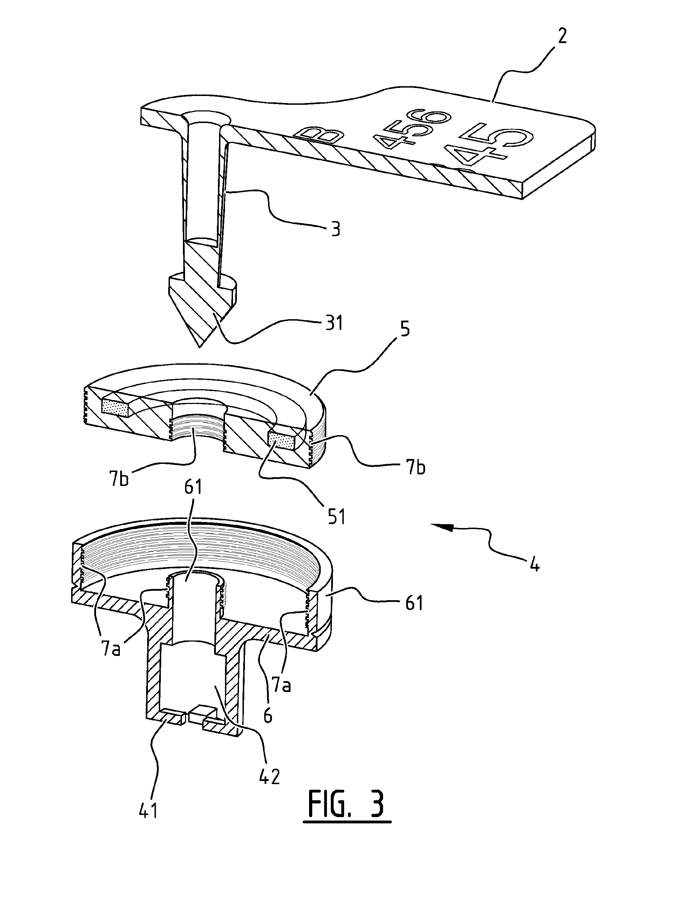

The tag 1, as shown in figure 2, is shown in exploded view in figure 3. As can be seen in figure 3, the lid part is in fact formed by two separate parts, namely a cover part 6 and a transponder part 5. The parts of the label part 2, the transponder part 5 and the cover part 6 are in first instance formed as separate pieces which can be mutually connected for forming the tag, as for instance shown in figure 2.

The transponder part 5 holds the transponder 51, which is formed in this example by an antenna connected to a rewritable RFID chip. The transponder part 5 enclosed the transponder 51, such that the transponder 51 is not exposed to the outside. The transponder part 5 is manufactured from a durable and hard plastic. The label part 2 and the cover part 6 are manufactured from a less durable and cheaper plastic.

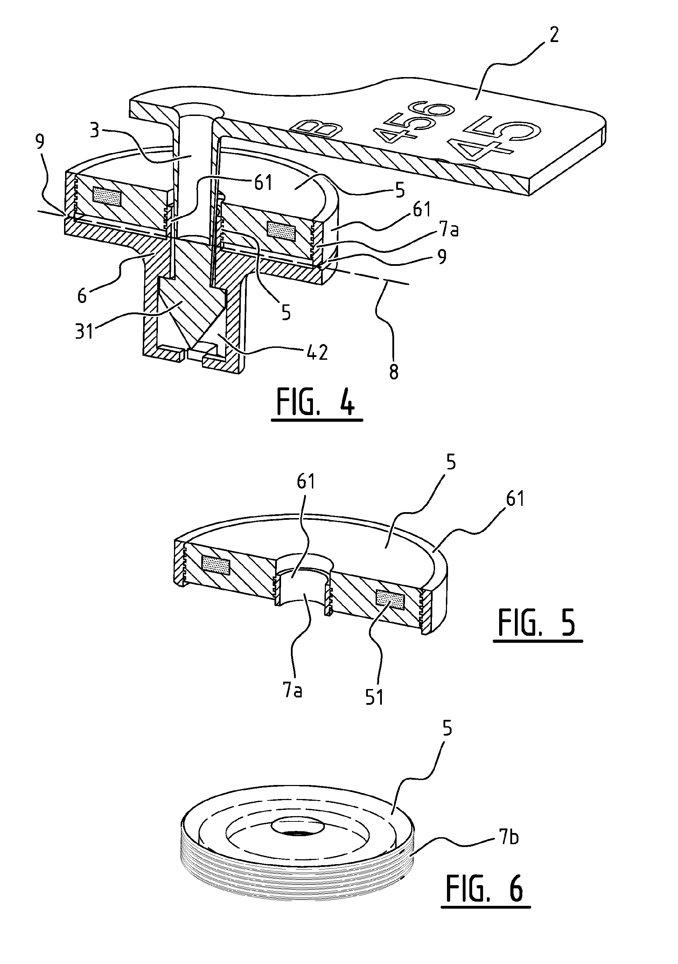

The transponder part 5 and the cover part 6 are provided with mutually cooperating connecting elements 7a, 7b in the form of ribs. The ribs for the cover part 6 are provided on flanges 61, wherein the flanges 61 form a recess for receiving the transponder part 5 in the cover part 6 as is shown in the connected state in figure 4.

When the stem 3 is pierced through the ear of the animal, the lid part 4, formed by the combination of the cover part 6 and the transponder part 5, can be connected to the label part 2. The head part 31 of the stem 3 is hereto resilient, such that the diameter of the head 31 is reduced when the head 31 is forced through the opening of both the transponder part 5 and the cover part 6. When the head 31 finally extends in a chamber 42 of the cover part 6, the head returns to its original diameter, thereby locking the three parts together, as can be seen in figure 4.

In this locked state, the transponder part 5 extends at a distance from the cover part 6 for forming a cutting space. A cutting plane indicated with 8 passes through the cutting space between the two parts 5 and 6. The parts of the flanges 61 intersecting the plane 8 are provided with weakenings 9 to facilitate cutting.

When the tag 1 is removed or is to be removed, the tag is cut by a blade along the cutting plane 8. The flanges 61 being part of the connecting elements for connecting the transponder part 5 with the cover body 6 are separated from this cover body 6, making it possible to efficiently remove the transponder part 5 from the tag, as is shown in figure 5. The flanges 61 provided with the connecting elements 7a, can then readily be removed from the transponder part 5. The transponder part 5 can then be reused, after being reprogrammed for tagging another animal. Figure 6 shows a transponder part 5 being ready for a new use. The connecting elements 7b are shown on the circumference of the annular shaped transponder part 5.

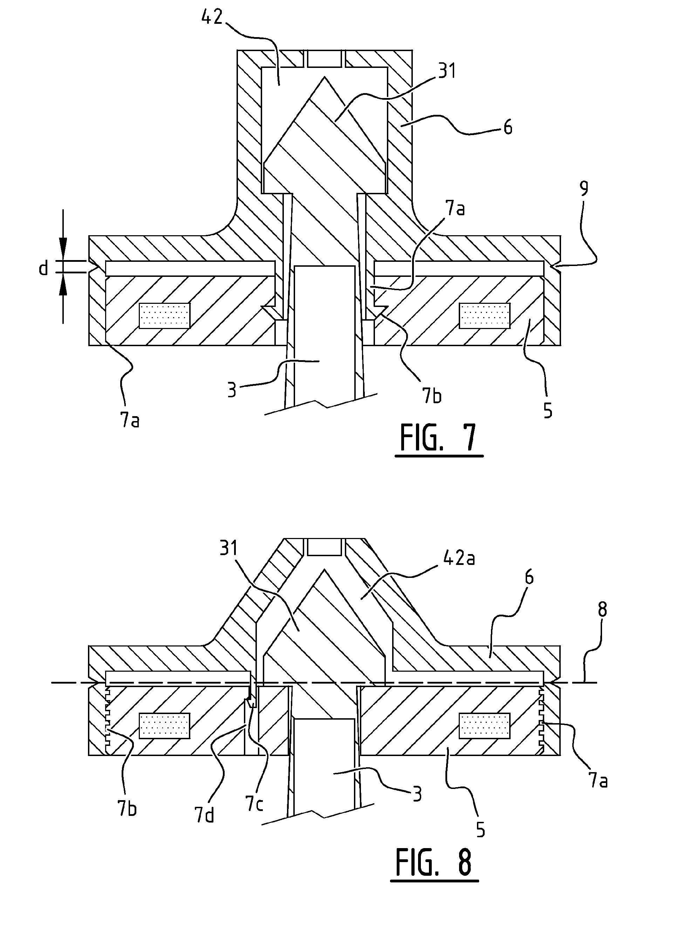

Figure 7 shows a similar tag, wherein instead of the ribs for connecting the transponder part 4 to the cover part 6, hooks 7a are used which fall into a slot 7b formed in the transponder part 5. The transponder part 5 can be connected to the cover part 6 by forcing the hooks 7a in the slot 7b. Next, the label part 2 can be connected by inserting the stem 3. Also shown in figure 7 is that the transponder part 5 and the cover part 6 lie at a distance d from each other in the connected state.

Figure 8 shows a different embodiment, wherein the chamber 42a is formed immediately after the transponder body 5, wherein an upper surface of the transponder part 5, as shown in figure 8, abbuts the head part 31 of the stem 3. For connecting the transponder part 5 to the cover part 6, ribs 7a, similar as in figures 3 and 4, are used on the outer circumference, whereas near the centre of the transponder part 5, multiple hooks 7c are provided which engage slots 7d in the transponder part 5.

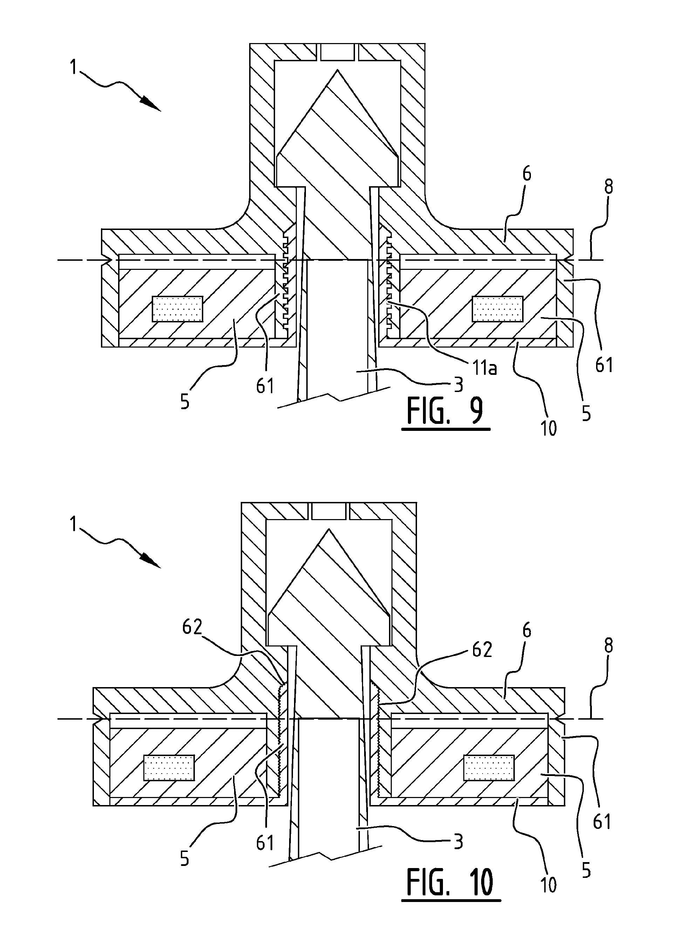

The tag 1 as shown in figure 9 uses a connecting plate 10 to connect the transponder part 5 to the cover part 6. After the transponder part 5 is inserted into the recess formed by the flanges 61 of the cover part, the connecting blade 10 with flange 11 having ribs for connecting with the ribs of the flange 61 is connected for clamping in the transponder part 5. Cutting the tag 1 along the plane 8, will cut the flanges 61 and 11 of both the cover part 6 and the connecting plate 10, thereby separating the pieces, such that the transponder part 5 can be readily recovered for subsequent use.

Figure 10 shows the tag of figure 9, wherein the cover part 6 and the connecting plate 10 are connected using ultrasonic welding. The two parts 6 and 10 for a single body in use, defining a recess for receiving the transponder part 5.

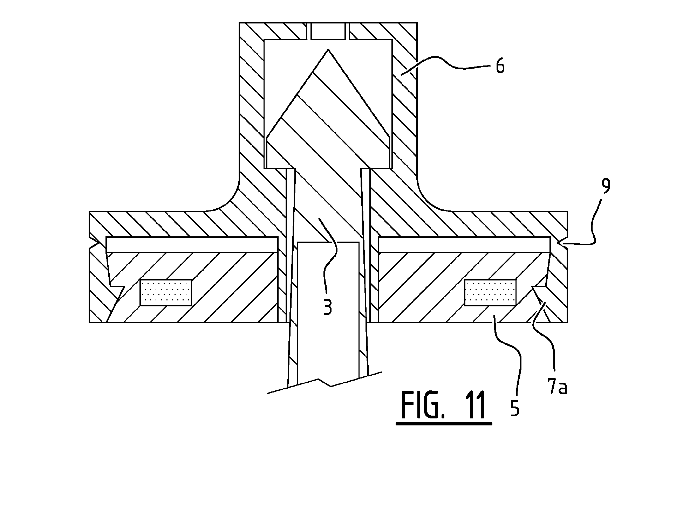

Figure 11 shows another example wherein only hooks 7a engaging a slot in the transponder part 5 are used to connect the transponder part 5 to the cover body 6.

The present invention is not limited to the embodiment shown, but extends also to other embodiments falling within the scope of the appended claims.

## Claims

1. Tag for identifying an animal, in particular livestock, comprising a first part provided with a male element and a second part provided with a female element, wherein the parts are arranged to form a mutual interlocking connection for connecting the tag to a portion, in particular an ear, of the animal, wherein one of the parts comprises a transponder body holding a transponder for identification of the animal, the transponder body being arranged in the tag for recovery of the transponder body during dismantling of the tag for reuse of the transponder body with said transponder in another tag.

2. Tag according to claim 1, wherein the transponder body is formed as a separate component of the tag and is arranged in the tag by interlocking.

3. Tag according to claim 1 or 2, wherein the transponder body encloses the transponder, in particular a chip and possibly an antenna of the transponder.

4. Tag according to claim 1, 2 or 3, wherein the second part comprises the transponder body, wherein the transponder body is an annular body as a female element for receiving the male part of the first part of the tag.

5. Tag according to claim 4, wherein the second part further comprises a cover body, the cover body being arranged to cover the end of the male element, wherein the cover body and the transponder body are connected by interlocking.

6. Tag according to claim 5, wherein the transponder body and the cover body extend at a distance from each other for defining a cutting space between the transponder body and the cover body, wherein the cutting space at least encloses a plane, preferably a cutting plane, having at least a size and shape corresponding to the orthogonal projection of the transponder body on the plane.

7. Tag according to claim 5 or 6, wherein the transponder body and the cover body comprise cooperating locking elements, wherein the locking elements and the male element of the first part extend through a cutting plane dividing the transponder body and the cover body.

8. Tag according to claim 7, wherein the tag is provided with at least one weakening in the cutting plane.

9. Tag according to any of the preceding claims 1 to 8, wherein the transponder comprises a rewritable RFID-tag.

10. Transponder body for use in the tag according to any of the preceding claims 1 to 9.

11. Method for manufacturing a tag for identifying an animal, in particular livestock, according to the invention, the method comprising the steps of:
- providing a transponder body having a transponder for identification of the animal
- providing a first part of a tag provided with a male part;
- providing a second part of a tag provided with a corresponding female part
- providing at least one of the parts with the transponder body.

12. Method according to claim 11, wherein the step of providing the second part comprises providing the transponder body with a cover body, the cover body being arranged to cover the end of the male element of the first part in the connected position.

13. Method for dismantling a tag for identifying an animal, in particular livestock, according to any of the preceding claims 1 to 9 from a portion of said animal, wherein the method comprises the steps of:
— cutting the male part of the first part for separating the first and the second parts of the tag, and;
— recovering the transponder body from the tag.

14. Method according to claim 13, wherein the step of cutting the male part comprises cutting along a cutting plane extending between the transponder body and a cover body of the second part of the tag for cutting locking elements connecting the transponder body and the cover body.

15. Method according to any of the claims 11 to 14, further comprising the step of rewriting the transponder, in particular an RFID-tag.
